# EUROPÄISCHE PATENTSCHRIFT

(11) **EP 4 017 718 B1**
(45) Veröffentlichungstag und Bekanntmachung des Hinweises auf die Patenterteilung: **07.02.2024**
(21) Anmeldenummer: 20746646.7
(22) Anmeldetag: 28.07.2020
(51) Int. Cl.: B30B 5/02, B29C 70/44

(54) **VERFAHREN ZUM VORSPANNEN DER MEMBRAN EINER MEMBRANPRESSE UND PRESSE ZUR DURCHFÜHRUNG DIESES VERFAHRENS**
METHOD FOR PRETENSIONING THE DIAPHRAGM OF A DIAPHRAGM PRESS, AND PRESS FOR CARRYING OUT THIS METHOD
PROCÉDÉ DE PRÉCONTRAINTE DU DIAPHRAGME D'UNE PRESSE À DIAPHRAGME ET PRESSE POUR LA MISE EN OEUVRE DE CE PROCÉDÉ

(30) Priorität: 22.08.2019 DE 102019005916
(43) Veröffentlichungstag der Anmeldung: 29.06.2022
(73) Patentinhaber: Siempelkamp Maschinen- und Anlagenbau GmbH, 47803 Krefeld (DE)
(72) Erfinder: KÖFFERS, Fabian, 47807 Krefeld (DE); SCHÖLER, Michael, 47509 Rheurdt (DE); SCHÜRMANN, Klaus, 41363 Jüchen (DE); SEBASTIAN, Lothar, 47239 Duisburg (DE)
(74) Vertreter: Cohausz & Florack
(86) Internationale Anmeldenummer: PCT/EP2020/071239
(87) Internationale Veröffentlichungsnummer: WO 2021/032416

(56) Entgegenhaltungen:
- EP-A1- 0 245 762
- EP-A2- 2 082 866
- EP-A2- 2 251 188
- WO-A2-2006/128699
- DE-A1- 3 017 273
- DE-A1-102016 101 631
- GB-A- 2 005 189

## Beschreibung

Die Erfindung betrifft ein Verfahren zum Vorspannen der Membran einer Presse, umfassend die folgenden Schritte: a) Bereitstellen einer Presse mit einem ersten Presswerkzeug, einem zweiten Presswerkzeug, und einer Membran, wobei das erste Presswerkzeug und das zweite Presswerkzeug relativ zueinander bewegbar sind, wobei die Membran mit einem der Presswerkzeuge verbunden ist, wobei sich zwischen der Membran und dem mit ihr verbundenen Presswerkzeug eine Kavität für ein Arbeitsmedium ausbildet, und wobei die Kavität durch wenigstens eine Dichtung abgedichtet ist, die mit einer Dichtungskraft auf die Membran drückt, b) Bereitstellen von wenigstens einem Werkstück, wobei das Werkstück eine Matrix und darin eingelegte Fasern aufweist, c) Einlegen des Werkstücks in die Presse, d) Schließen der Presse, e) Beaufschlagen des Werkstücks mit Druck und/oder mit Temperatur mittels der Membran, wobei aus dem Werkstück ein ausgehärtetes Formteil entsteht, und f) Öffnen der Presse und entnehmen des Formteils.

Die Erfindung betrifft zudem eine Presse zur Durchführung dieses Verfahrens, umfassend: ein erstes Presswerkzeug, ein zweites Presswerkzeug, und eine Membran, wobei das erste Presswerkzeug und das zweite Presswerkzeug relativ zueinander bewegbar sind, wobei die Membran mit einem der Presswerkzeuge verbunden ist, wobei sich zwischen der Membran und dem mit ihr verbundenen Presswerkzeug eine Kavität für ein Arbeitsmedium ausbildet, und wobei die Kavität durch wenigstens eine Dichtung abgedichtet ist, die mit einer Dichtungskraft auf die Membran drückt.

Bei Faserverbundwerkstoffen handelt es sich um Verbundwerkstoffe, die im Wesentlichen aus zwei Hauptkomponenten bestehen: aus verstärkenden Fasern sowie aus einem Kunststoff, in den die Fasern eingebettet sind ("Matrix" bzw. "Harz"). Durch die Kombination der beiden Hauptkomponenten kann erreicht werden, dass der Verbundwerkstoff insgesamt bessere Eigenschaften aufweist, als die beiden Komponenten allein betrachtet. Beispielsweise tragen die Fasern aufgrund ihrer hohen Zugfestigkeit in Faserrichtung dazu bei, die Zugfestigkeit des Verbundmaterials zu erhöhen. Die Matrix sorgt hingegen beispielsweise dafür, dass die Fasern in ihrer Position gehalten werden und vor mechanischen und chemischen Einflüssen geschützt werden.

Eine von mehreren Möglichkeiten der Herstellung von Bauteilen aus Faserverbundwerkstoffen basiert auf der Verwendung von vorgefertigten Faser-Harz-Halbzeugen (sog. "Prepregs", Kurzform von "preimpregnated fibers"). Bei derartigen Halbzeugen sind die Fasern mit einem noch nicht fertig reagierten Harzsystem versehen, so dass die Halbzeuge noch in flexibler Form vorliegen (z.B. bahnförmig, auf Rollen). Erst bei der Herstellung der Bauteile werden die Prepregs umgeformt und bei hohem Druck und hohen Temperaturen durch die Vollendung der chemischen Reaktion ausgehärtet. Dieser Schritt kann beispielsweise in einer Presse erfolgen.

Prepregs werden beispielsweise in der Luftfahrtindustrie in großen Mengen verarbeitet. Eine Herausforderung bei der Verarbeitung liegt darin, dass in der Luftfahrtindustrie häufig sehr komplexe Bauteilgeometrien erforderlich sind, beispielsweise aufgrund von Verstärkungselementen wie Stringern. Zudem soll der Montageaufwand verringert werden, was durch die Verwendung weniger, aber dafür größerer Bauteile erreicht werden soll. Die Kombination aus komplexen Geometrien und großen Bauteildimensionen stellt erhöhte Anforderungen an Vorrichtungen und Verfahren zur Herstellung dieser Bauteile. Eine Anforderung besteht beispielsweise darin, bei der Herstellung der Bauteile eine gleichmäßige Beaufschlagung mit Druck zu gewährleisten.

Eine Vorrichtung und ein Verfahren zum Herstellen von Bauteilen aus Faserverbundwerkstoff sind beispielsweise aus der DE 10 2017 113 595 A1 bekannt. Eine gleichmäßige Beaufschlagung des herzustellenden Bauteils mit Druck soll dadurch erreicht werden, dass eine flexible Membran auf das Bauteil einwirkt, wobei von der dem Bauteil abgewandten Seite der Membran ein Öldruck auf die Membran einwirkt. Die Membran wird also von einem Öldruck auf die Bauteiloberfläche gepresst. Auf diese Weise soll auch bei gekrümmten Bauteiloberflächen sichergestellt sein, dass der Öldruck allseitig wirkt und somit die von der Membran auf die Bauteiloberfläche wirkende Kraft an jeder Stelle gleich groß ist, insbesondere auch die orthogonal auf die Bauteiloberfläche einwirkende Kraftkomponente.

Die Verwendung einer derartigen "Membranpresse" zur Herstellung von Bauteilen aus Faserverbundwerkstoff ist auch aus der US 2016/0297153 A1 bekannt.

Eine Herausforderung des Einsatzes einer Membran liegt darin, dass die Membran während des gesamten Herstellvorgangs eine möglichst glatte Oberfläche aufzuweisen muss, um eine gleichmäßige Druckübertragung auf die Bauteiloberfläche zu gewährleisten. Gleichzeitig muss die Membran gegenüber der Kavität, in der der Öldruck aufgebaut wird, zuverlässig abgedichtet sein, aber gleichwohl beweglich gelagert sein, um auch bei thermisch bedingter Expansion oder Kontraktion ihre glatte Oberfläche beizubehalten. Das Dokument WO2006/128699 A2 offenbart ein Verfahren nach dem Oberbegriff des Anspruchs 1 und eine Vorrichtung nach dem Oberbegriff des Anspruchs 9.

Vor diesem Hintergrund liegt der Erfindung die Aufgabe zugrunde, bei der Herstellung von Formteilen aus Faserverbund-Werkstoff mit einer Membranpresse unter Berücksichtigung der Anforderungen an die Abdichtung und die bewegliche Lagerung der Membran eine möglichst glatte Membranoberfläche sicherzustellen.

Diese Aufgabe wird bei einem Verfahren nach Anspruch 1 gelöst.

Bei dem erfindungsgemäßen Verfahren handelt es sich um ein Verfahren zum Vorspannen der Membran einer Presse. Das Verfahren umfasst zunächst den Schritt des Bereitstellens einer so genannten "Membranpresse". Die Presse umfasst ein erstes - beispielsweise oberes - Presswerkzeug, ein zweites - beispielsweise unteres - Presswerkzeug und eine Membran. Die Membran kann beispielsweise durch ein dünnes Metallblech gebildet sein. Das erste Presswerkzeug und das zweite Presswerkzeug sind relativ zueinander bewegbar, so dass die Presse geöffnet und geschlossen werden kann. Die Membran ist mit einem der beiden Presswerkzeuge verbunden, wobei sich zwischen der Membran und dem mit ihr verbundenen Presswerkzeug eine Kavität für ein Arbeitsmedium ausbildet. Die Kavität ist dazu bestimmt, ein Arbeitsmedium - beispielsweise ein Gas oder eine Flüssigkeit - in sich aufzunehmen. Die Membran und das mit ihr verbundene Presswerkzeug sind daher in einer gas- und/oder flüssigkeitsdichten Weise miteinander verbunden. Das Volumen des Arbeitsraumes ist bei geschlossener Presse durch eine Bewegung der Membran veränderbar, also vergrößerbar oder verkleinerbar. Die Kavität ist durch wenigstens eine Dichtung abgedichtet, die mit einer Dichtungskraft auf die Membran drückt. Bei der Dichtung kann es sich beispielsweise um eine Graphitdichtung handeln, die vorzugsweise ein Drahtgeflecht aufweist.

Das erfindungsgemäße Verfahren umfasst zudem den Schritt des Bereitstellens von wenigstens einem Werkstück, wobei das Werkstück eine Matrix und darin eingelegte Fasern aufweist. Bei den in der Matrix eingelegten Fasern kann es sich beispielsweise um Kohlenstofffasern ("Carbonfasern"), Glasfasern, Aramidfasern oder dergleichen handeln. Die Fasern können beispielsweise als Halbzeuge in Form von Matten, Vliesen, Gelegen, Geweben, Geflechten oder Gestricken verwendet werden. Die Matrix bzw. das Harz kann beispielsweise aus thermoplastischem Kunststoff gebildet sein. Bei dem Werkstück kann es sich um bereits fertige "Faser-Matrix-Halbzeuge" handeln, die auch als "Prepreg" bezeichnet werden.

Die weiteren Schritte des erfindungsgemäßen Verfahrens sind das Einlegen des Werkstücks in die Presse (insbesondere in deren Arbeitsraum), das Schließen der Presse, das Beaufschlagen des Werkstücks mit Druck und/oder mit Temperatur mittels der Membran, wobei aus dem Werkstück ein ausgehärtetes Formteil entsteht, und das Öffnen der Presse und das Entnehmen des Formteils.

Erfindungsgemäß ist vorgesehen, dass die Membran bereits vor Schritt e) vorgespannt ist. Mit anderen Worten soll die Membran bereits eine Vorspannung aufweisen, bevor das Werkstück mit Druck und/oder Temperatur beaufschlagt wird, insbesondere bereits bevor das in der Kavität befindliche Arbeitsmedium unter Druck gesetzt wird und/oder aufgeheizt wird. Da die Membran bereits vor der Einwirkung von Druck und/oder Temperatur gespannt sein soll, wird diese Spannung auch als Vorspannung bezeichnet. Vorzugsweise weist die Membran eine Vorspannung auf, wobei eine Flächenpressung auf die Dichtung erzeugt wird, ist groß genug ist, um die Kavität zuverlässig abzudichten. Die dadurch entstehende Reibkraft ist dabei noch gering genug, um über die Vorspannung noch eine Bewegung der Membran zulassen zu können. Vorzugsweise ist die Vorspannkraft größer als die Reibungskraft der auf die Membran einwirkenden Dichtung, da andernfalls keine zuverlässige Vorspannung der Membran erreicht werden kann, wenn die Vorspannkraft außerhalb der Dichtung an die Membran angreift. Durch die Vorspannung wird sichergestellt, dass die Membran bereits zu Beginn der Einwirkung auf das Werkstück eine glatte Oberfläche aufweist und nicht erst durch den von dem in der Kavität befindlichen Arbeitsmedium unter Spannung gesetzt und somit "glatt gezogen" wird. Dies hat den Vorteil, dass bereits zu Beginn der Temperatur- und Druckeinwirkung eine gleichmäßige Einwirkung der Membran auf das Werkstück erfolgt. Bisher bekannte Lösungen verzichten hingegen auf eine Vorspannung der Membran, um eine möglichst flexible Anpassung der Membran an die Form der Werkstückoberfläche zu ermöglichen.

In einer besonders einfachen Ausgestaltung kann die Membran dabei permanent unter Vorspannung stehen, spätestens sobald die Membran auf das Werkstück aufgesetzt hat. Sofern ein gewölbtes Werkstück erzeugt werden soll, ist es bevorzugt, dass die Membran ein geringeres Bogenmaß als das zu erzeugende Werkstück besitzt.

Gemäß einer Ausgestaltung des Verfahrens ist vorgesehen, dass während Schritt e) der Druck und/oder die Temperatur des Arbeitsmediums in der Kavität verändert werden.

Indem der Druck und/oder die Temperatur des Arbeitsmediums in der Kavität veränderbar ist, sind auch der Druck, der auf das Werkstück einwirkt sowie die Temperatur, die auf das Werkstück einwirkt, veränderbar, da sowohl der Druck als auch die Temperatur des Arbeitsmediums über die Membran auf das Werkstück übertragen werden. Da sowohl der Druck als auch die Temperatur verändert werden können, ist es möglich, anstelle eines konstanten Drucks und einer konstanten Temperatur auch sich verändernde Druck- und Temperaturverläufe vorzusehen, beispielsweise zunächst ein Anstieg von Druck und Temperatur, danach ein Konstanthalten von Druck und Temperatur und abschließend ein Absenken von Druck und Temperatur. Ermöglicht wird eine Veränderung des Druckes des Arbeitsmediums beispielsweise durch eine Veränderung Menge des in der Kavität befindlichen Arbeitsmediums durch Zufluss oder Abfluss von Arbeitsmedium. Eine Veränderung der Temperatur des Arbeitsmediums kann hingegen beispielsweise dadurch erreicht werden, dass das Arbeitsmedium zirkuliert und das Zufließende Arbeitsmedium eine höhere oder niedrigere Temperatur als das in der Kavität befindliche Arbeitsmedium aufweist und dieses somit erwärmt oder kühlt. Alternativ dazu kann eine Veränderung der Temperatur des Arbeitsmediums in der Kavität auch dadurch erreicht werden, dass das Arbeitsmedium durch das Werkzeug und/oder Werkstück temperiert wird.

Nach einer weiteren Ausgestaltung des Verfahrens ist vorgesehen, dass in Schritt e) der Druck des in der Kavität befindlichen Arbeitsmediums bis auf einen Maximaldruck im Bereich zwischen 5 bar und 50 bar, insbesondere zwischen 10 bar und 30 bar angehoben wird.

Alternativ oder zusätzlich hierzu kann gemäß einer weiteren Ausgestaltung des Verfahrens vorgesehen sein, dass in Schritt e) die Temperatur des in der Kavität befindlichen Arbeitsmediums auf eine Maximaltemperatur im Bereich zwischen 300°C und 500°C, insbesondere zwischen 330°C und 410°C angehoben wird.

Die zuvor genannten Maximaldrücke und die zuvor genannten Maximaltemperaturen haben bei der Herstellung von Formteilen aus Faserverbund-Werkstoff zu optimalen Ergebnissen geführt. Bei den angegebenen Werten handelt es sich um Maximalwerte; während der Herstellung in der Presse werden auch niedrigere Druck- und Temperaturwerte erreicht, beispielsweise während der Aufwärmphase und während der Abkühlphase.

Nach der Erfindung ist vorgesehen, dass die Dichtungskraft während Schritt e) verändert wird.

Indem die Dichtungskraft während der Beaufschlagen des Werkstücks mit Druck und/oder mit Temperatur verändert wird, ist es möglich, die Wirkungsweise der Dichtung an die sich während des Verfahrens ändernden Anforderungen anzupassen. Die bedarfsgerechte Anpassung der Wirkungsweise der Dichtung ist deshalb besonders vorteilhaft, da die beiden Ziele einer besonders guten Abdichtung (hohe Dichtungskraft) und einer besonders guten Beweglichkeit der Membran (niedrige Dichtungskraft) nicht gleichzeitig und in maximalem Umfang erreicht werden können; es besteht insoweit ein Zielkonflikt. Eine Möglichkeit der Auflösung eines derartigen Zielkonflikts besteht in der Festlegung einer Rangordnung zwischen den konkurrierenden Zielen; beispielsweise wird eine gute Abdichtung als Hauptziel definiert, während eine gute Beweglichkeit der Membran lediglich als Nebenziel definiert wird. Indem die Dichtungskraft während des Verfahrens verändert werden kann, ist es möglich, die Rangordnung zwischen den konkurrierenden Zielen während des Verfahrens zu verändern. Beispielsweise kann zu Beginn des Verfahrens (z.B. in der Aufheizphase bei ansteigenden Temperaturen) die Beweglichkeit der Membran als Hauptziel definiert werden, weil in dieser Phase thermisch bedingte Ausdehnungen der Membran ermöglicht werden sollen. Erreicht wird dies durch die Einstellung einer niedrigen Dichtungskraft. Im weiteren Verlauf des Verfahrens (z.B. bei konstant hohen Temperaturen und hohen Drücken) kann demgegenüber die gute Abdichtung der Membran als Hauptziel definiert werden, weil in dieser Phase ein hohes Leckagerisiko besteht, während thermisch bedingte Ausdehnungen der Membran infolge der etwa konstanten Temperaturen kaum noch auftreten. Dies kann durch die Einstellung einer höheren Dichtungskraft erreicht werden. Durch die Einstellbarkeit bzw. Veränderbarkeit der Dichtungskraft wird daher eine situations- und bedarfsgerechte Priorisierung von konkurrierenden Zielen ermöglicht.

Konstruktiv kann die Veränderbarkeit der Dichtungskraft beispielsweise durch einen auf die Dichtung einwirkenden Aktuator erreicht werden, der die Dichtung stärker oder weniger stark auf die Membranoberfläche presst.

Nach einer weiteren Ausgestaltung des Verfahrens ist vorgesehen, dass die Dichtungskraft in Abhängigkeit von dem Druck und/oder der Temperatur des in der Kavität befindlichen Arbeitsmediums verändert wird.

Dies beinhaltet sowohl eine Veränderung der Dichtungskraft in Abhängigkeit von festen Druck- oder Temperaturwerten (z.B. Überschreitung einer Druck- oder Temperaturgrenze) als auch eine Veränderung der Dichtungskraft in Abhängigkeit von Veränderungsraten der Druck- und Temperaturwerte (z.B. Überschreitung einer bestimmten Aufheizrate). Diese Ausgestaltung konkretisiert den zuvor beschriebenen Aspekt der Veränderbarkeit der Dichtungskraft, indem die Dichtungskraft mit den Verfahrensparametern Druck und Temperatur verknüpft wird. Dies hat den Vorteil, dass die Dichtungskraft automatisch angepasst werden kann, wenn der Druck und/oder die Temperatur bestimmte Grenzen über- oder unterschreiten. Hierzu kann die Presse beispielsweise eine Regelungseinrichtung sowie Sensoren zur Messung des Drucks und der Temperatur aufweisen. Vorzugsweise wird bei höheren Drücken eine höhere Dichtungskraft eingestellt als bei niedrigeren Drücken um eine gute Abdichtung zu gewährleisten. Bei der Temperatur kommt es hingegen eher auf die Veränderungsrate an; bei Anstiegen oder Absenkungen der Temperatur wird daher vorzugsweise eine geringere Dichtungskraft eingestellt um die Bewegung der Membran infolge thermisch bedingter Expansion bzw. Kontraktion nicht einzuschränken.

Gemäß einer weiteren Ausgestaltung des Verfahrens ist vorgesehen, dass wenigstens eine erste Dichtungskraft und eine davon unterschiedliche, insbesondere höhere, zweite Dichtungskraft eingestellt wird.

Die Festlegung von zwei oder mehr konstanten Werten für die Dichtungskraft vereinfacht die Regelung des Verfahrens. Insbesondere ist die optimale Abstimmung aller Verfahrensparameter aufeinander einfacher möglich, wenn die Dichtungskraft nur zwischen einer begrenzten Anzahl an konstanten Werten umgestellt wird und nicht jeden beliebigen Wert einnehmen kann. Die Umstellung zwischen den unterschiedlichen Werten kann beispielsweise bei Über- oder Unterschreitung bestimmter Absolutwerte oder Änderungsraten des Drucks und/oder der Temperatur erfolgen. Beispielsweise kann unterhalb einer Temperatur von 200°C bis 250°C eine erste - niedrigere - Dichtungskraft eingestellt werden und es kann oberhalb einer Temperatur von 250°C eine zweite - höhere - Dichtungskraft eingestellt werden. Alternativ oder zusätzlich hierzu kann vorgesehen sein, dass unterhalb eines Druckes von beispielsweise etwa 5 bar (Kavitätsdruck) eine erste - niedrigere - Dichtungskraft eingestellt wird und dass oberhalb dieser Druckgrenze eine zweite - höhere - Dichtungskraft eingestellt wird.

Nach einer weiteren Ausgestaltung des Verfahrens ist vorgesehen, dass die Membran aus Metall hergestellt ist und vorzugsweise eine Dicke im Bereich zwischen 0,05 mm und 0,5 mm, insbesondere zwischen 0,25 mm und 0,4 mm aufweist. Eine Membran aus Metall, insbesondere aus einem Stahlblech, hat den Vorteil, dass die Membran aufgrund der mechanischen Eigenschaften von Metall einerseits hohe Drücke übertragen kann und andererseits aufgrund der hohen thermischen Leitfähigkeit von Metall gut dazu geeignet ist, das Werkstück zu heizen oder zu kühlen. Die Übertragung von Drücken wird dadurch erreicht, dass neben der Membran eine Kavität vorgesehen ist, die von einem möglichst inkompressiblen Arbeitsmedium - beispielsweise Öl - befüllt werden kann, wodurch sich die Membran verformt und in Richtung des Werkstücks gedrückt wird. Eine Erwärmung oder Abkühlung des Werkstücks kann erreicht werden, wenn das in der Kavität befindliche Arbeitsmedium erwärmt oder gekühlt wird. Vorzugsweise weist die Membran eine sehr glatte Oberfläche auf, insbesondere eine Oberfläche mit einem Rz-Wert von 2,5 µm, oder von 1,0 µm oder sogar von 0,1 µm oder weniger.

Die zuvor beschriebene Aufgabe wird bei einer Presse nach Anspruch 9 gelöst.

Die Einrichtung zur Vorspannung der Membran kann beispielsweise durch eine Feder mit verstellbarem Federweg bzw. verstellbarer Vorspannung realisiert werden. Durch eine derartige Einrichtung kann eine Vorspannung der Membran eingestellt werden um auch verändert werden, beispielsweise um die Vorspannung an die herzustellenden Werkstücke anzupassen. Durch die Veränderbarkeit der Vorspannung der Membran können die zuvor bereits im Zusammenhang mit dem Verfahren diskutierten Vorteile erreicht werden.

Die Veränderbarkeit der Dichtungskraft kann beispielsweise durch einen auf die Dichtung einwirkenden Aktuator erreicht werden, der die Dichtung stärker oder weniger stark auf die Membranoberfläche presst. Durch die Veränderbarkeit der Dichtungskraft können die zuvor bereits im Zusammenhang mit dem Verfahren diskutierten Vorteile erreicht werden. Wenn zwei oder mehr Dichtungen vorgesehen sind, ist vorzugsweise an jeder Dichtung eine Einrichtung zur Veränderung der Dichtungskraft vorgesehen, so dass die Dichtungskraft an jeder Dichtung unabhängig von den anderen Dichtungen eingestellt und verändert werden kann.

Die Erfindung wird nachfolgend anhand einer lediglich ein bevorzugtes Ausführungsbeispiel darstellenden Zeichnung näher erläutert. In der Zeichnung zeigen:
- Fig. 1A:: eine erste Ausgestaltung einer Presse zur Durchführung eines erfindungsgemäßen Verfahrens im Querschnitt in geöffneter Stellung ohne eingelegtes Werkstück,
- Fig. 1B:: die Presse aus Fig. 1A in geöffneter Stellung mit eingelegtem Werkstück,
- Fig. 1C:: die Presse aus Fig. 1A in geschlossener Stellung,
- Fig. 2A:: einen Teilbereich der Presse aus Fig. 1C in vergrößerter Ansicht,
- Fig. 2B:: einen Teilbereich der Presse aus Fig. 1C in vergrößerter Ansicht,
- Fig. 3A:: einen Teilbereich einer zweiten Ausgestaltung einer Presse zur Durchführung eines erfindungsgemäßen Verfahrens in vergrößerter Ansicht,
- Fig. 3B:: einen Teilbereich einer zweiten Ausgestaltung einer Presse zur Durchführung eines erfindungsgemäßen Verfahrens in vergrößerter Ansicht, und
- Fig. 4:: den Ablauf eines erfindungsgemäßen Verfahrens in schematischer Darstellung.

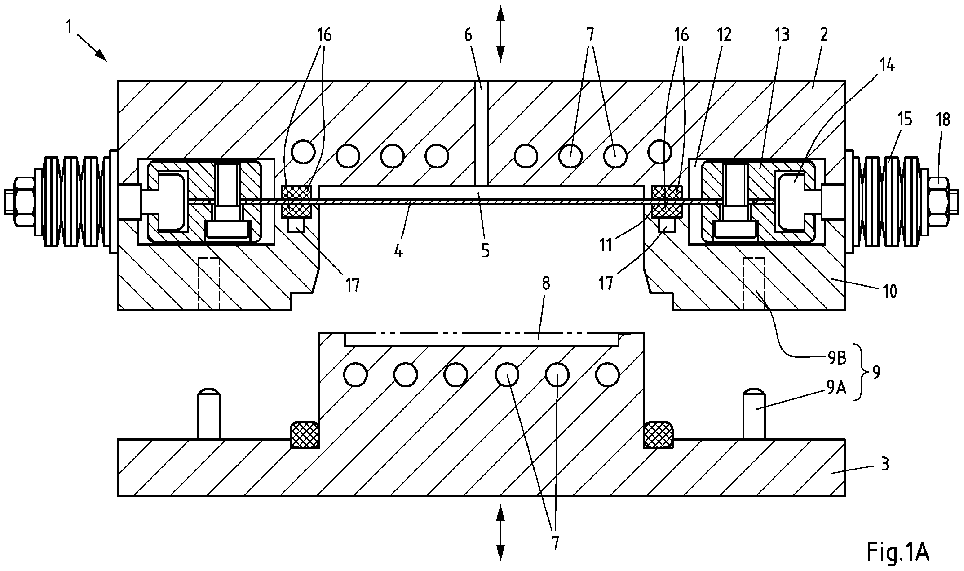

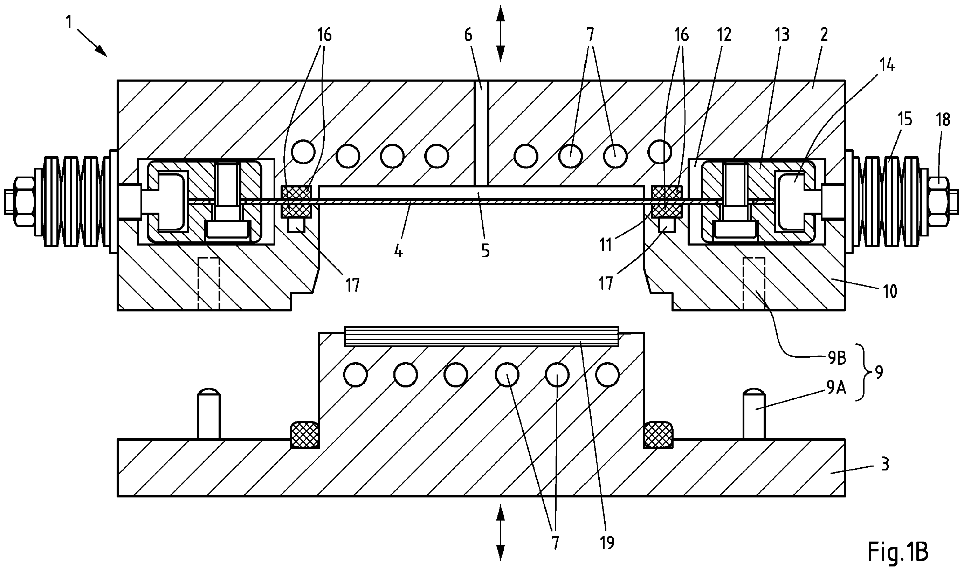

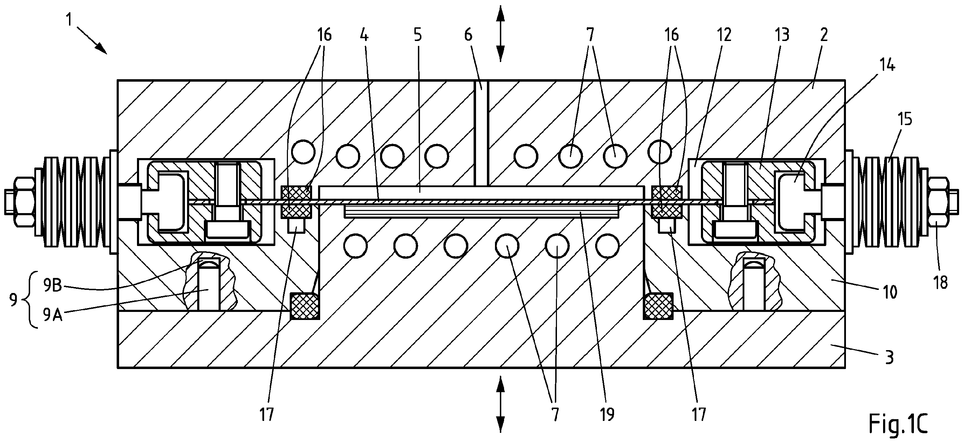

Fig. 1A zeigt eine erste Ausgestaltung einer Presse 1 zur Durchführung eines erfindungsgemäßen Verfahrens im Querschnitt in geöffneter Stellung ohne eingelegtes Werkstück. Die Presse 1 umfasst ein erstes - oberes - Presswerkzeug 2 sowie ein zweites - unteres - Presswerkzeug 3. Die beiden Presswerkzeuge 2, 3 sind relativ zueinander bewegbar, beispielsweise in vertikaler Richtung (in Fig. 1 angedeutet durch Pfeile). Zudem umfasst die Presse eine Membran 4, die mit dem oberen Presswerkzeug 2 verbunden ist. Alternativ zu der in Fig. 1 gezeigten Ausgestaltung könnte die Membran 4 auch mit dem unteren Presswerkzeug 3 verbunden sein. Zwischen der Membran 4 und dem mit ihr verbundenen oberen Presswerkzeug 2 bildet sich eine Kavität 5 für ein Arbeitsmedium, beispielsweise Öl. Die Membran 4 ist aus Metall hergestellt und weist vorzugsweise eine Dicke im Bereich zwischen 0,05 mm und 0,5 mm auf. Die Kavität 5 kann über einen Kanal 6 mit dem Arbeitsmedium befüllt werden. Sowohl in dem oberen Presswerkzeug 2 als auch in dem unteren Presswerkzeug 3 sind Bohrungen 7 vorgesehen, durch die ein Heiz- und/oder Kühlmedium geleitet werden kann.

Bei der in Fig. 1A gezeigten Ausgestaltung der Presse 1 ist in dem unteren Presswerkzeug 3 ein Arbeitsraum 8 vorgesehen, in den ein (in Fig. 1A nicht gezeigtes) Werkstück eingelegt werden kann. Die beiden Presswerkzeuge 2, 3 weisen eine Führung 9 auf, die beispielsweise durch einen Vorsprung 9A und eine Ausnehmung 9B gebildet sein kann, wobei der Vorsprung 9A an dem unteren Presswerkzeug 3 vorgesehen sein kann und wobei die Ausnehmung 9B an dem oberen Presswerkzeug 2 vorgesehen sein kann.

Die Membran 4 ist mit dem oberen Presswerkzeug 2 auf die folgende Weise verbunden: Das obere Presswerkzeug 2 weist ein umlaufendes Randelement 10 auf, das mit dem oberen Presswerkzeug 2 verschraubt ist (die Verschraubung ist in Fig. 1A nicht dargestellt). Zwischen dem oberen Presswerkzeug 2 und seinem Randelement 10 bildet sich ein Spalt 11, durch den die Membran 4 hindurch geführt wird. Der Spalt 11 mündet in einen Hohlraum 12, in dem eine Klemmeinrichtung 13 vorgesehen ist, in die die Membran 4 eingeklemmt ist. Die Klemmeinrichtung 13 ist mit einem Zuganker 14 verbunden, der durch eine Öffnung aus dem oberen Presswerkzeug 2 und dem Randelement 10 herausgeführt wird und dort durch eine sich an der Außenfläche abstützende Feder 15 nach außen gedrückt wird, wodurch die Membran 4 mit einer Vorspannung versehen wird. Zur Abdichtung der Kavität 5 ist in dem Spalt 11 eine Dichtung 16 vorgesehen, die eine Bewegung der Membran 4 erlaubt. Angrenzend an die Dichtung 16 ist eine Einrichtung 17 zur Veränderung der Dichtungskraft F_{D} vorgesehen. Angrenzend an die Feder 15 ist eine Einrichtung 18 zur Veränderung der Federkraft F_{F} vorgesehen.

Fig. 1B zeigt die Presse 1 aus Fig. 1A in geöffneter Stellung mit eingelegtem Werkstück 19. Diejenigen Bereiche der Presse 1, die bereits zuvor beschrieben worden sind, sind in Fig. 1B mit entsprechenden Bezugszeichen versehen. Der Unterschied zu der in Fig. 1A gezeigten Stellung liegt darin, dass das Werkstück 19 in den Arbeitsraum 8 des unteren Presswerkzeugs 3 eingelegt worden ist.

Fig. 1C zeigt die Presse 1 aus Fig. 1A in geschlossener Stellung. Diejenigen Bereiche der Presse 1, die bereits zuvor beschrieben worden sind, sind auch in Fig. 1C mit entsprechenden Bezugszeichen versehen. Die Presse 1 wurde geschlossen, indem die beiden Presswerkzeuge 2, 3 aufeinander zu bewegt worden sind. In der in Fig. 1C gezeigten Stellung wird das Werkstück 19 mit Druck und Temperatur beaufschlagt. Die Beaufschlagung mit Druck erfolgt, indem ein Arbeitsmedium, beispielsweise Öl, durch den Kanal 6 in die Kavität 5 geleitet wird, wodurch die Membran 4 in Richtung des Werkstücks 19 gepresst wird. Die Beaufschlagung mit Temperatur kann auf unterschiedliche Weise erfolgen: Eine Möglichkeit besteht darin, das durch den Kanal 6 in die Kavität 5 geleitete Arbeitsmedium zu erhitzen, so dass die Wärme von dem in der Kavität 5 befindlichen Arbeitsmedium durch die Membran 4 auf das Werkstück 19 übertragen wird. Umgekehrt könnte das Arbeitsmedium gekühlt werden, um das Werkstück 19 zu kühlen. Alternativ oder zusätzlich hierzu kann vorgesehen sein, dass die Bohrungen 7 von einem Heiz- und/oder Kühlmedium durchströmt werden, wodurch zunächst die beiden Presswerkzeuge 2, 3 und anschließend auch das Werkstück 19 aufgeheizt oder abgekühlt werden können. Infolge der Druckeinwirkung ist das Werkstück 19 in der in Fig. 1C gezeigten Stellung komprimiert.

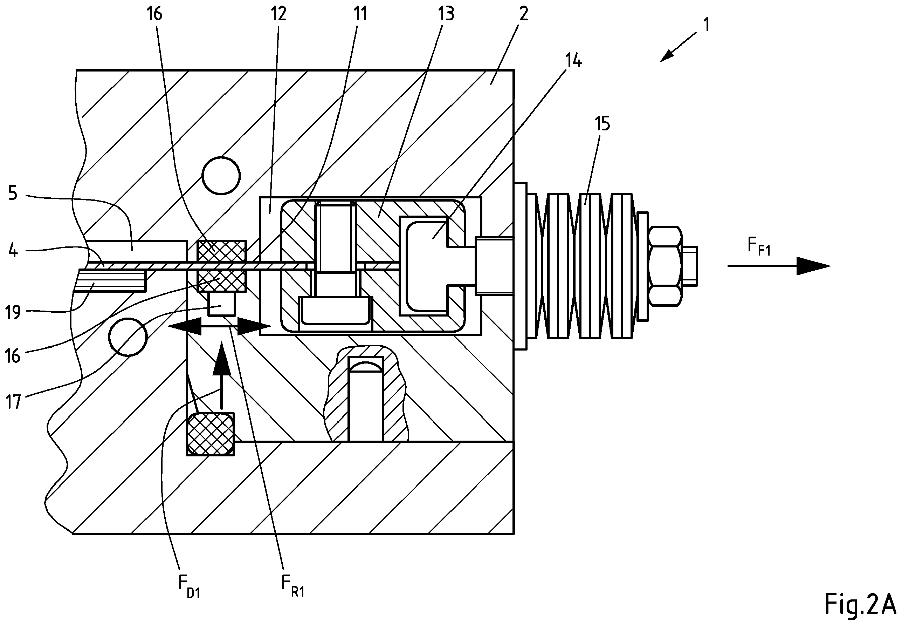

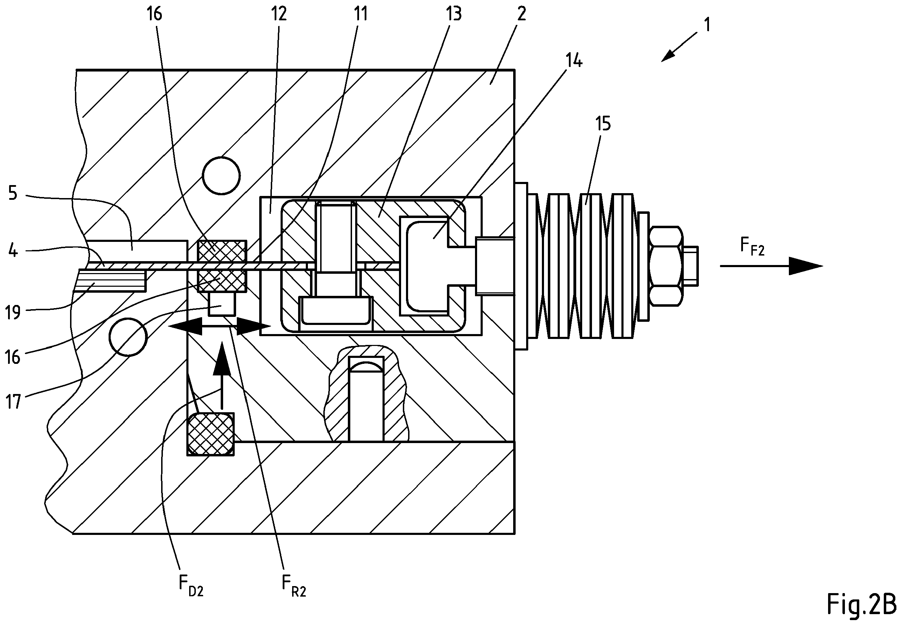

Fig. 2A und Fig. 2B zeigen einen Teilbereich der Presse aus Fig. 1C in vergrößerter Ansicht. Diejenigen Bereiche der Presse 1, die bereits zuvor beschrieben worden sind, sind auch in Fig. 2A und in Fig. 2B mit entsprechenden Bezugszeichen versehen. In Fig. 2A und in Fig. 2B sind die Einspannung und Abdichtung der Membran 4 besonders gut zu erkennen. Die Kavität 5 wird abgedichtet, indem die in dem Spalt 11 angeordnete Dichtung 16 mit einer Dichtungskraft F_{D1} (Fig. 2A) bzw. F_{D2} (Fig. 2B) auf die Membran 4 drückt. Die Dichtungskraft F_{D1}, F_{D2} wirkt senkrecht auf die Oberfläche der Membran 4, also in Fig. 2A und Fig. 2B etwa in vertikaler Richtung. Die Größe der Dichtungskraft F_{D1}, F_{D2} kann durch die Einrichtung 17 zur Veränderung der Dichtungskraft verändert werden. Dies kann beispielsweise dadurch erfolgen, dass die Einrichtung 17 zur Veränderung der Dichtungskraft einen Aktuator aufweist, der die Dichtung 16 mit größerer oder kleinerer Kraft auf die Membran 4 presst. Die in Fig. 2A dargestellte Dichtungskraft F_{D1} ist geringer als die in Fig. 2B dargestellte Dichtungskraft F_{D2}. Beispielsweise zeigt Fig. 2A den Zustand unterhalb einer bestimmten Temperaturgrenze des in der Kavität 5 befindlichen Arbeitsmediums (z.B. unterhalb von 250°C, insbesondere unterhalb von 200°C) und Fig. 2B zeigt den Zustand oberhalb einer bestimmten Temperaturgrenze des in der Kavität 5 befindlichen Arbeitsmediums (z.B. oberhalb von 250°C). Eine größere Dichtungskraft führt zu einer zuverlässigeren Abdichtung, schränkt jedoch die Beweglichkeit der Membran 4 ein (bis hin zu einer vollständigen "Sperrung" der Membran 4). Umgekehrt verbessert eine geringere Dichtungskraft die Beweglichkeit der Membran 4, führt jedoch zu einer verschlechterten Abdichtung und der damit verbundenen Gefahr von Leckagen. Die Größe der Dichtungskraft F_{D1}, F_{D2} kann daher in Abhängigkeit von den Verfahrensparametern (insb. Druck und Temperatur in der Kavität 5) durch die Einrichtung 17 zur Veränderung der Dichtungskraft auf einen optimalen Wert eingestellt werden.

Die in Fig. 2A und Fig. 2B dargestellte Dichtungskraft F_{D1}, F_{D2} führt bei einer Bewegung der Membran 4 relativ zu der Dichtung 16 zu einer Reibungskraft F_{R1}, F_{R2}. Die Reibungskraft F_{R1}, F_{R2} wirkt parallel zur Oberfläche der Membran 4, also in Fig. 2A und Fig. 2B etwa in horizontaler Richtung. Die Reibungskraft F_{R1}, F_{R2} ist zudem stets der Bewegung der Membran 4 entgegengerichtet; da sich die Membran 4 thermisch bedingt ausdehnen und zusammenziehen kann, kann die Reibungskraft F_{R1}, F_{R2} also unterschiedliche Richtungen aufweisen (in Fig. 2A und in Fig. 2B durch Doppelpfeile dargestellt). Die Größe der Reibungskraft F_{R1}, F_{R2} hängt von der Größe der sie verursachenden Dichtungskraft F_{D1}, F_{D2} ab, oftmals gibt es innerhalb bestimmter Grenzen einen etwa linearen Zusammenhang (das Verhältnis zwischen Reibungskraft und Anpresskraft wird auch als "Reibungskoeffizient" bezeichnet). Demnach ist die in Fig. 2A dargestellte Reibungskraft F_{R1} geringer als die in Fig. 2B dargestellte Reibungskraft F_{R2}.

Zudem ist in Fig. 2A und Fig. 2B eine Federkraft F_{F1}, F_{F2} dargestellt, mit der die Membran 4 vorgespannt wird. Die Federkraft F_{F1}, F_{F2} wirkt parallel zur Oberfläche der Membran 4, also in Fig. 2A und Fig. 2B etwa in horizontaler Richtung. Auch die Größe der Federkraft F_{F1}, F_{F2} ist einstellbar bzw. veränderbar, und zwar durch die Einrichtung 18 zur Veränderung der Federkraft F_{F}. Die Einstellung bzw. Veränderung der Federkraft F_{F} kann beispielsweise durch eine Veränderung der Vorspannung der Feder 15 erreicht werden. Die Federkraft F_{F1} (Fig. 2A) ist etwa gleich groß wie die Federkraft F_{F2} (Fig. 2B).

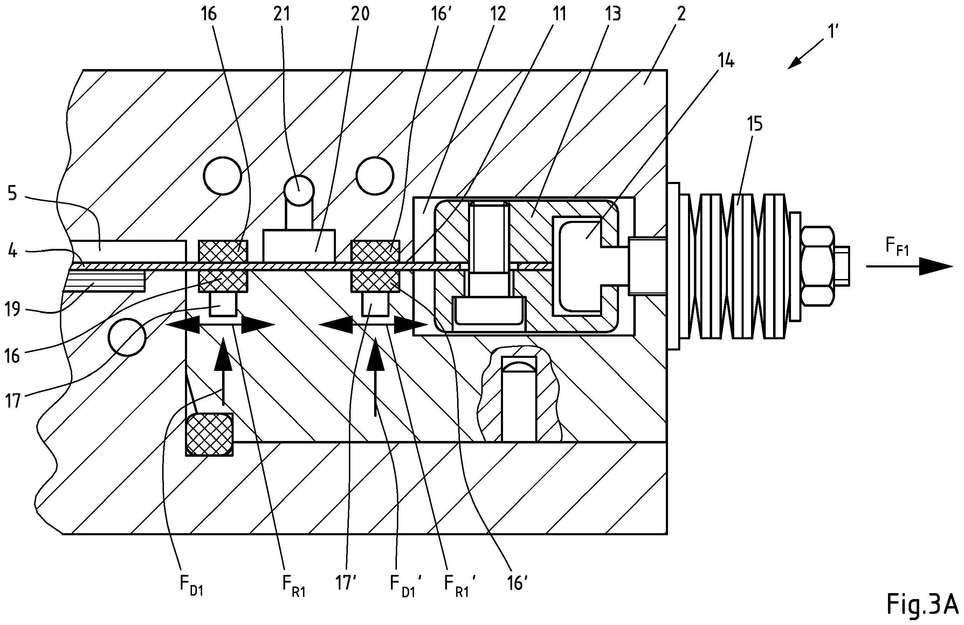

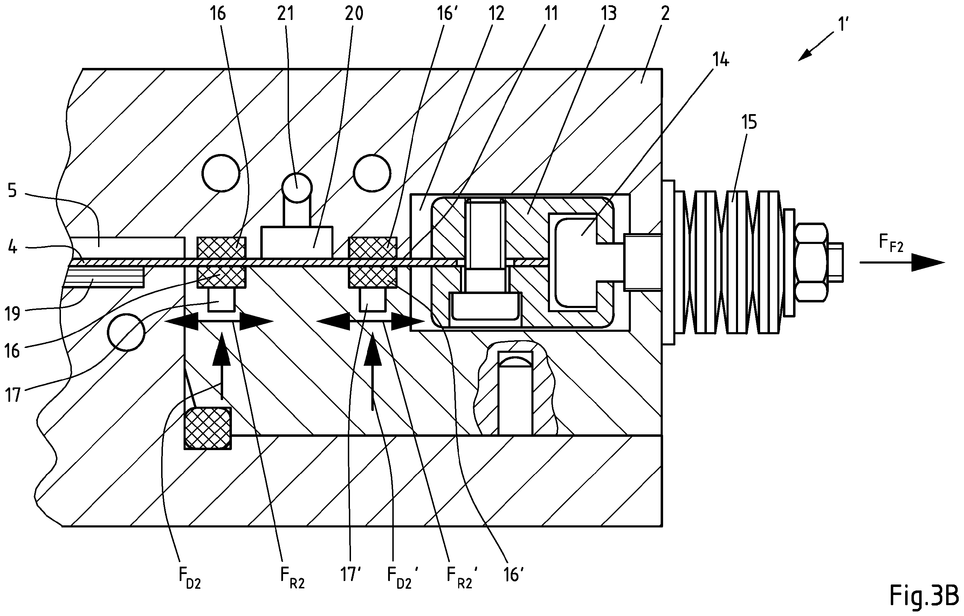

Fig. 3A und Fig. 3B zeigen einen Teilbereich einer zweiten Ausgestaltung einer Presse 1' zur Durchführung eines erfindungsgemäßen Verfahrens in vergrößerter Ansicht. Diejenigen Bereiche der Presse 1', die bereits zuvor beschrieben worden sind, sind auch in Fig. 3A und in Fig. 3B mit entsprechenden Bezugszeichen versehen. Der wesentliche Unterschied zu der zuvor gezeigten und beschriebenen Presse 1 liegt darin, dass die in Fig. 3A und Fig. 3B gezeigte Presse 1' neben der ersten Dichtung 16 eine zweite Dichtung 16' aufweist, die ebenfalls im Bereich des Spaltes 11 angeordnet ist, um dort auf die Membran 4 einzuwirken. Auch die zweite Dichtung 16' ist mit einer Einrichtung 17' zur Veränderung der Dichtungskraft F_{D} versehen, mit der in der bereits beschriebenen Weise die Dichtungskraft F_{D1}', F_{D2}' an der zweiten Dichtung 16' verändert werden kann. Auch die in Fig. 3A und Fig. 3B dargestellte Dichtungskraft F_{D1}', F_{D2}' führt bei einer Bewegung der Membran 4 relativ zu der Dichtung 16' zu einer Reibungskraft F_{R1}', F_{R2}'. Die Reibungskraft F_{R1}', F_{R2}' wirkt auch an der zweiten Dichtung 16' parallel zur Oberfläche der Membran 4, also in Fig. 3A und Fig. 3B etwa in horizontaler Richtung. Die Reibungskraft F_{R1}', F_{R2}' ist zudem stets der Bewegung der Membran 4 entgegengerichtet; da sich die Membran 4 thermisch bedingt ausdehnen und zusammenziehen kann, kann die Reibungskraft F_{R1}', F_{R2}' also unterschiedliche Richtungen aufweisen (in Fig. 3A und in Fig. 3B durch Doppelpfeile dargestellt). Die Größe der Reibungskraft F_{R1}', F_{R2}' hängt von der Größe der sie verursachenden Dichtungskraft F_{D1}', F_{D2}'ab, oftmals gibt es innerhalb bestimmter Grenzen einen etwa linearen Zusammenhang (das Verhältnis zwischen Reibungskraft und Anpresskraft wird auch als "Reibungskoeffizient" bezeichnet). Demnach ist die in Fig. 3A dargestellte Reibungskraft F_{R1}' geringer als die in Fig. 3B dargestellte Reibungskraft F_{R2}'.

In Fig. 3A und Fig. 3B ist zudem ein Hohlraum 20 erkennbar, der in dem Spalt 11 zwischen den beiden Dichtungen 16, 16' angeordnet ist. Der Hohlraum dient dazu, bei einer Undichtigkeit der ersten Dichtung 16 aus der Kavität 5 austretendes Arbeitsmedium aufzufangen und durch einen Auslass 21 abzuleiten. Auf diese Weise kann eine geringfügige Leckage der ersten Dichtung 16 hingenommen werden. Dies erlaubt es, die Dichtungskraft F_{D1}, F_{D2} an der ersten Dichtung 16 so niedrig einzustellen, dass die dort auftretende Reibungskraft F_{R1}, F_{R2} gering ist und die Membran 4 sich relativ zu der ersten Dichtung 16 möglichst gut bewegen kann, insbesondere thermisch bedingt ausdehnen und zusammenziehen kann. Eine vollständige Abdichtung der Presse 1' erfolgt dann durch die zweite Dichtung 16', die aufgrund der Druckdifferenz bzw. des Druckabfalls zwischen der ersten Dichtung 16 und der zweiten Dichtung 16' ebenfalls so eingestellt werden kann, dass die dort auftretende Dichtungskraft F_{D1}', F_{D2}' und die dadurch verursachte Reibungskraft F_{R1}', F_{R2}' so niedrig sind, dass die Membran 4 sich auch relativ zu der zweiten Dichtung 16' möglichst gut bewegen kann und keine Sperrung oder Verklemmung der Membran 4 zu befürchten ist.

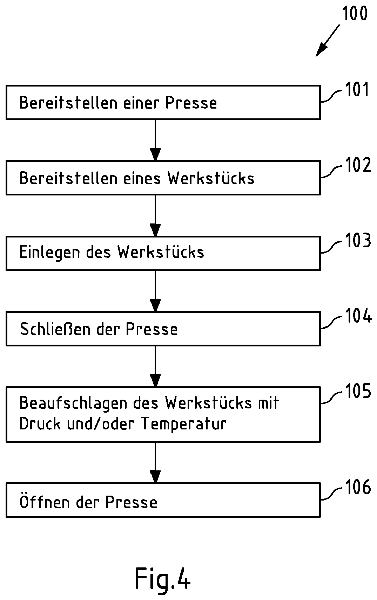

Fig. 4 zeigt schließlich den Ablauf eines erfindungsgemäßen Verfahrens 100 in schematischer Darstellung. Das Verfahren 100 umfasst die folgenden Schritte: 101: Bereitstellen einer Presse, 102: Bereitstellen eines Werkstücks, 103: Einlegen des Werkstücks, 104: Schließen der Presse, 105: Beaufschlagen des Werkstücks mit Druck und/oder mit Temperatur, 106: Öffnen der Presse.

### Bezugszeichenliste:

- 1, 1':: Presse
- 2:: erstes (oberes) Presswerkzeug
- 3:: zweites (unteres) Presswerkzeug
- 4:: Membran
- 5:: Kavität
- 6:: Kanal
- 7:: Bohrung
- 8:: Arbeitsraum
- 9:: Führung
- 9A:: Vorsprung
- 9B:: Ausnehmung
- 10:: Randelement
- 11:: Spalt
- 12:: Hohlraum
- 13:: Klemmeinrichtung
- 14:: Zuganker
- 15:: Feder
- 16, 16':: Dichtung
- 17, 17':: Einrichtung (zur Veränderung der Dichtungskraft F_{D})
- 18:: Einrichtung (zur Veränderung der Federkraft F_{D})
- 19:: Werkstück
- 20:: Hohlraum
- 21:: Auslass
- F_{D1}, F_{D2}:: Dichtungskraft (der Dichtung 16)
- F_{D1}', F_{D2}':: Dichtungskraft (der Dichtung 16')
- F_{R1}, F_{R2}:: Reibungskraft (der Dichtung 16)
- F_{R1}', F_{R2}':: Reibungskraft (der Dichtung 16')
- F_{F1}, F_{F2}:: Federkraft (der Feder 15)

## Patentansprüche

1. Verfahren zum Vorspannen der Membran (4) einer Presse (1, 1'), umfassend die folgenden Schritte:
a) Bereitstellen einer Presse (1, 1') mit
- einem ersten Presswerkzeug (2),
- einem zweiten Presswerkzeug (3), und
- einer Membran (4),
- wobei das erste Presswerkzeug (2) und das zweite Presswerkzeug (3) relativ zueinander bewegbar sind,
- wobei die Membran (4) mit einem der Presswerkzeuge (2) verbunden ist,
- wobei sich zwischen der Membran (4) und dem mit ihr verbundenen Presswerkzeug (2) eine Kavität (5) für ein Arbeitsmedium ausbildet, und
- wobei die Kavität (5) durch wenigstens eine Dichtung (16, 16') abgedichtet ist, die mit einer Dichtungskraft (F_{D1}, F_{D2}, F_{D1}', F_{D2}') auf die Membran (4) drückt,
b) Bereitstellen von wenigstens einem Werkstück (19),
c) Einlegen des Werkstücks (19) in die Presse (1, 1'),
d) Schließen der Presse (1, 1'),
e) Beaufschlagen des Werkstücks (19) mit Druck und/oder mit Temperatur mittels der Membran (4), wobei aus dem Werkstück (19) ein ausgehärtetes Formteil entsteht, und
f) Öffnen der Presse (1, 1') und entnehmen des Formteils,
- wobei die Membran (4) bereits vor Schritt e) vorgespannt ist,
**dadurch gekennzeichnet, dass**
die Dichtungskraft (F_{D1}, F_{D2}, F_{D1}', F_{D2}') während Schritt e) verändert wird, und das Werkstück (19) eine Matrix und darin eingelegte Fasern aufweist.

2. Verfahren nach Anspruch 1,
**dadurch gekennzeichnet, dass**
während Schritt e) der Druck und/oder die Temperatur des Arbeitsmediums in der Kavität (5) verändert werden.

3. Verfahren nach Anspruch 1 oder Anspruch 2,
**dadurch gekennzeichnet, dass**
in Schritt e) der Druck des in der Kavität (5) befindlichen Arbeitsmediums bis auf einen Maximaldruck im Bereich zwischen 5 bar und 50 bar, insbesondere zwischen 15 bar und 30 bar angehoben wird.

4. Verfahren nach einem der Ansprüche 1 bis 3,
**dadurch gekennzeichnet, dass**
in Schritt e) die Temperatur des in der Kavität (5) befindlichen Arbeitsmediums auf eine Maximaltemperatur im Bereich zwischen 300°C und 500°C, insbesondere zwischen 350°C und 410°C angehoben wird.

5. Verfahren nach einem der Ansprüche 1 bis 4,
**dadurch gekennzeichnet, dass**
die Dichtungskraft (F_{D1}, F_{D2}, F_{D1}', F_{D2}') während Schritt e) durch eine Einrichtung (17, 17') zur Veränderung der Dichtungskraft (F_{D1}, F_{D2}, F_{D1}', F_{D2}'), insbesondere einen auf die Dichtung (16, 16') einwirkenden Aktuator, verändert wird.

6. Verfahren nach einem der Ansprüche 1 bis 5,
**dadurch gekennzeichnet, dass**
die Dichtungskraft (F_{D1}, F_{D2}, F_{D1}', F_{D2}') in Abhängigkeit von dem Druck und/oder der Temperatur des in der Kavität (5) befindlichen Arbeitsmediums verändert wird.

7. Verfahren nach einem der Ansprüche 1 bis 6,
**dadurch gekennzeichnet, dass**
wenigstens eine erste Dichtungskraft (F_{D1}) und eine davon unterschiedliche, insbesondere höhere, zweite Dichtungskraft (F_{D2}) eingestellt wird.

8. Verfahren nach einem der Ansprüche 1 bis 7,
**dadurch gekennzeichnet, dass**
die Membran (4) aus Metall hergestellt ist und vorzugsweise eine Dicke im Bereich zwischen 0,05 mm und 0,5 mm, insbesondere zwischen 0,25 mm und 0,4 mm aufweist.

9. Presse (1, 1') zur Durchführung des Verfahrens nach einem der Ansprüche 1 bis 8, umfassend:
- ein erstes Presswerkzeug (2),
- ein zweites Presswerkzeug (3), und
- eine Membran (4),
- wobei das erste Presswerkzeug (2) und das zweite Presswerkzeug (3) relativ zueinander bewegbar sind,
- wobei die Membran (4) mit einem der Presswerkzeuge (2) verbunden ist,
- wobei sich zwischen der Membran (4) und dem mit ihr verbundenen Presswerkzeug (2) eine Kavität (5) für ein Arbeitsmedium ausbildet,
- wobei die Kavität (5) durch wenigstens eine Dichtung (16, 16') abgedichtet ist, die mit einer Dichtungskraft (F_{D1}, F_{D2}, F_{D1}', F_{D2}') auf die Membran (4) drückt, und
- wobei wenigstens eine Einrichtung (18) zur Veränderung der Vorspannung der Membran (4) vorgesehen ist,
**gekennzeichnet durch**
wenigstens eine Einrichtung (17, 17'), die zur Veränderung der Dichtungskraft (F_{D1}, F_{D2}, F_{D1}', F_{D2}') der Dichtung (16, 16') während Schritt e) ausgelegt ist, beispielsweise aufweisend einen auf die Dichtung (16, 16') einwirkenden Aktuator.

## Claims

1. Method for prestressing the membrane (4) of a press (1,1'), comprising the following steps:
a) providing a press (1, 1') having
- a first pressing tool (2),
- a second pressing tool (3), and
- a membrane (4),
- wherein the first pressing tool (2) and the second pressing tool (3) can be moved relative to one another,
- wherein the membrane (4) is connected to one of the pressing tools (2),
- wherein a cavity (5) for a working medium is formed between the membrane (4) and the pressing tool (2) connected to it, and
- wherein the cavity (5) is sealed by at least one seal (16, 16') which presses on the membrane (4) with a sealing force (F_{D1}, F_{D2}, F_{D1}', FD₂'),
b) providing at least one workpiece (19),
c) inserting the workpiece (19) into the press (1,1'),
d) closing the press (1,1'),
e) applying pressure and/or temperature to the workpiece (19) by means of the membrane (4), wherein a hardened moulded part is formed from the workpiece (19), and
f) opening the press (1,1') and removing the moulded part,
wherein the membrane (4) is already prestressed before step e),
**characterized in that**
the sealing force (F_{D1}, F_{D2}, F_{D1}', F_{D2}') is changed during step e), and
the workpiece (19) has a matrix and fibres inserted therein.

2. Method according to claim 1,
**characterised in that**
during step e) the pressure and/or the temperature of the working medium in the cavity (5) are changed.

3. Method according to claim 1 or claim 2,
**characterised in that**
in step e), the pressure of the working medium in the cavity (5) is increased to a maximum pressure in the range between 5 bar and 50 bar, in particular between 15 bar and 30 bar.

4. Method according to any one of claims 1 to 3,
**characterised in that**
in step e), the temperature of the working medium in the cavity (5) is increased to a maximum temperature in the range between 300°C and 500°C, in particular between 350°C and 410°C.

5. Method according to any one of claims 1 to 4,
**characterised in that**
the sealing force (F_{D1}, F_{D2}, F_{D1}', F_{D2}') is changed during step e) by a device (17, 17') for changing the sealing force (F_{D1}, F_{D2}, F_{D1}', F_{D2}'), in particular by an actuator acting on the seal (16, 16').

6. Method according to any one of claims 1 to 5,
**characterised in that**
the sealing force (F_{D1}, F_{D2}, F_{D1}', F_{D2}') is changed depending on the pressure and/or the temperature of the working medium in the cavity (5).

7. Method according to any one of claims 1 to 6,
**characterised in that**
at least one first sealing force (F_{D1}) and one second sealing force (F_{D2}) different thereto, in particular a greater sealing force, is set.

8. Method according to any one of claims 1 to 7,
**characterised in that**
the membrane (4) is manufactured from metal and preferably has a thickness in the range between 0.05 mm and 0.5 mm, in particular between 0.25 mm and 0.4mm.

9. Press (1,1') for carrying out the method according to any one of claims 1 to 8, comprising:
- a first pressing tool (2),
- a second pressing tool (3), and
- a membrane (4),
- wherein the first pressing tool (2) and the second pressing tool (3) can be moved relative to one another,
- wherein the membrane (4) is connected to one of the pressing tools (2),
- wherein a cavity (5) for a working medium is formed between the membrane (4) and the pressing tool (2) connected to it, and
- wherein the cavity (5) is sealed by at least one seal (16, 16') which presses on the membrane (4) with a sealing force (F_{D1}, F_{D2}, F_{D1}', F_{D2}'), and
- wherein at least one device (18) for changing the prestressing of the membrane (4) is provided,
**characterised by**
at least one device (17, 17') for changing the sealing force (F_{D1}, F_{D2}, F_{D1}', F_{D2}') of the seal (16, 16'), for example comprising an actuator acting on the seal (16, 16').p

## Revendications

1. Procédé de mise en précontrainte de la membrane (4) d'une presse (1, 1'), comprenant les étapes suivantes :
a) Fourniture d'une presse (1, 1') ayant
- un premier outil de pressage (2),
- un deuxième outil de pressage (3), et
- une membrane (4),
- le premier outil de pressage (2) et le deuxième outil de pressage (3) étant mobiles l'un par rapport à l'autre,
- la membrane (4) étant reliée à l'un des outils de pressage (2),
- une cavité (5) pour un fluide de travail étant formée entre la membrane (4) et l'outil de pressage (2) relié à celle-ci, et
- la cavité (5) étant rendue étanche par au moins un joint (16, 16') qui appuie sur la membrane (4) avec une force d'étanchéité (F_{D1}, F_{D2}, F_{D1}', FDZ`),
b) mise à disposition d'au moins une pièce à travailler (19),
c) mise en place de la pièce à travailler (19) dans la presse (1, 1'),
d) fermeture de la presse (1, 1'),
e) l'application de pression et/ou de température sur la pièce à travailler (19) au moyen de la membrane (4), une pièce moulée durcie étant obtenue à partir de la pièce à travailler (19), et
f) ouverture de la presse (1, 1') et retrait de la pièce moulée,
- la membrane (4) étant déjà précontrainte avant l'étape e),
**caractérisé en ce que**
la force d'étanchéité (F_{D1}, F_{D2}, F_{D1}', F_{D2}') est modifiée pendant l'étape e), et que la pièce à travailler (19) présente une matrice et des fibres insérées dans celle-ci.

2. Procédé selon la revendication 1, **caractérisé en ce que** la pression et/ou la température du fluide de travail dans la cavité (5) sont modifiées pendant l'étape e).

3. Procédé selon la revendication 1 ou la revendication 2, **caractérisé en ce que** la pression du fluide de travail se trouvant dans la cavité (5) est augmentée dans l'étape e) jusqu'à une pression maximale comprise entre 5 et 50 bar, notamment entre 15 et 30 bar.

4. Procédé selon l'une des revendications 1 à 3, **caractérisé en ce que** la température du fluide de travail se trouvant dans la cavité (5) est augmentée à une température maximale comprise entre 300 °C et 500 °C, notamment entre 350 °C et 410 °C, dans l'étape e).

5. Procédé selon l'une quelconque des revendications 1 à 4, **caractérisé en ce que** la force d'étanchéité (F_{D1}, F_{D2}, F_{D1}', F_{D2}') est modifiée pendant l'étape e) par un dispositif (17, 17') susceptible de modifier la force d'étanchéité (F_{D1}, F_{D2}, F_{D1}', F_{D2}'), notamment un actionneur agissant sur le joint (16, 16').

6. Procédé selon l'une des revendications 1 à 5, **caractérisé en ce que** la force d'étanchéité (F_{D1}, F_{D2}, F_{D1}', F_{D2}') est modifiée en fonction de la pression et/ou de la température du fluide de travail se trouvant dans la cavité (5).

7. Procédé selon l'une des revendications 1 à 6, **caractérisé en ce qu'**au moins une première force d'étanchéité (F_{D1}) et une deuxième force d'étanchéité (F_{D2}) différente, notamment plus élevée, sont réglées.

8. Procédé selon l'une des revendications 1 à 7, **caractérisé en ce que** la membrane (4) est fabriquée en métal et présente, de préférence, une épaisseur comprise entre 0,05 mm et 0,5 mm, notamment entre 0,25 mm et 0,4 mm.

9. Presse (1, 1') pour réaliser le procédé selon l'une des revendications 1 à 8, comprenant :
- un premier outil de pressage (2),
- un deuxième outil de pressage (3), et
- une membrane (4),
- le premier outil de pressage (2) et le deuxième outil de pressage (3) étant mobiles l'un par rapport à l'autre,
- la membrane (4) étant reliée à l'un des outils de pressage (2),
- une cavité (5) pour un fluide de travail étant formée entre la membrane (4) et l'outil de pressage (2) relié à celle-ci,
- la cavité (5) étant rendue étanche par au moins un joint (16, 16') qui appui sur la membrane (4) avec une force d'étanchéité (F_{D1}, F_{D2}, F_{D1}', F_{D2}'), et
- au moins un dispositif (18) étant prévu pour modifier la précontrainte de la membrane (4),
**caractérisé par**
au moins un dispositif (17, 17') conçu pour modifier la force d'étanchéité (F_{D1}, F_{D2}, F_{D1}', F_{D2}') du joint (16, 16') pendant l'étape e), comprenant par exemple un actionneur agissant sur le joint (16, 16').
